Europäisches Patentamt

European Patent Office

Office européen des brevets

(11) Veröffentlichungsnummer : **0 037 028**
**B1**

(12) **EUROPÄISCHE PATENTSCHRIFT**

(45) Veröffentlichungstag der Patentschrift :
08.02.84

(21) Anmeldenummer : **81102086.6**

(22) Anmeldetag : **20.03.81**

(51) Int. Cl.³ : **B 01 D 25/06**, A 01 K 63/04

(54) **Filter für Aquarien od. dgl.**

(30) Priorität : 01.04.80 DE 3012572

(43) Veröffentlichungstag der Anmeldung :
07.10.81 Patentblatt 81/40

(45) Bekanntmachung des Hinweises auf die Patenterteilung : 08.02.84 Patentblatt 84/06

(84) Benannte Vertragsstaaten :
AT BE CH DE FR GB IT LI LU NL SE

(56) Entgegenhaltungen :
DE-A- 1 442 541
DE-A- 2 360 539

(73) Patentinhaber : **Tetra Werke Dr.rer.nat. Ulrich
Baensch GmbH
Herrenteich 70
D-4520 Melle (DE)**

(72) Erfinder : **Panthöfer, Rudolf
Menden Keplerstrasse 24
D-5205 St. Augustin 3 (DE)**

(74) Vertreter : **Depmeyer, Lothar
Auf der Höchte 30
D-3008 Garbsen 1 (DE)**

Filter für Aquarien od. dgl.

Die Erfindung betrifft einen Filter für Aquarien, kleinere Gartenteiche und dgl. mit in einem Gehäuse angeordneten, einander parallelen Wänden zur Kammerbildung, die an einem Rand gelocht und so innerhalb des Gehäuses angeordnet sind, daß die Löcher einer Wand einer Gehäusewandung und die Löcher der benachbarten Wand der gegenüberliegenden Gehäusewandung zugekehrt sind.

Es ist bereits bekannt, das Filtergehäuse in mehrere Kammern zu unterteilen, um die Filterkapazität und die Filterwirksamkeit zu erhöhen. Dabei sind die die einzelnen Kammern bildenden Wände senkrecht angeordnet ; das Wasser kann dabei von einer Kammer in die andere überfließen.

Der Erfindung liegt im wesentlichen die Aufgabe zugrunde, die oben erwähnten Filter so zu verbessern, daß das Filtermaterial in Schichten übereinander angeordnet und demgemäß die Wände waagerecht liegend verwendet werden können. Zugleich wird eine vereinfachte Anbringung der Wände und deren Auswechselbarkeit gefordert.

Diese Aufgabe wird dadurch gelöst, daß die Wände diejenigen Kammern begrenzen, die das Filtermaterial beinhalten, und daß sich die Löcher entlang eine Kante der Wände erstrecken und das Filtermaterial in einer parallel zu den Wänden verlaufenden Richtung durchströmt wird. Wird bei einem so ausgeführten Filter das zu filternde Wasser dem Gehäuse von unten her unter einem gewissen Überdruck zugeführt, so durchströmt das Wasser die zwischen den einzelnen Wänden befindlichen Räume parallel zu den gelochten Wänden ; eine Umlenkung des Wassers und ein Überführen in die benachbarte Kammer erfolgen dann durch die kleinen Löcher der Wände, die sich — wie ausgeführt wurde — an einem Rand der Wand befinden.

Besonders vorteilhaft ist es ferner, wenn die Wände als einteilige Kunststofformkörper ausgeführt sind. Dabei ist es möglich, die Wände mit einem wulstartigen umlaufenden Rand zu versehen, um den Wänden an ihren Rändern eine gewisse Verformungsmöglichkeit zu verleihen. Werden die so ausgeführten Wände in ihr Gehäuse eingesetzt, so können durch die verformbaren Randpartien nicht nur Ungenauigkeiten sondern auch Haltekräfte erzeugt werden, die zur Halterung der Wände in dem Gehäuse ausreichend sind.

Weitere Einzelheiten der Erfindung werden anhand der Zeichnung erläutert, in der ein vorzugsweise zur Anwendung kommendes Ausführungsbeispiel dargestellt ist.

Es zeigen :

Figur 1 einen senkrechten Teilschnitt durch ein vorzugsweise als sog. Aussenfilter verwendbares Filter und

Figur 2 eine Teildraufsicht auf eine zur Kammerbildung dienende Wand für den Filter gemäß Fig. 1.

Das Gehäuse 1, von dem der Boden und der Deckel und die zugehörigen Anschlüsse nicht dargestellt sind, weist einen quadratischen oder rechteckigen Grundriß auf ; die in der Zeichnung dargestellten senkrechten Gehäusewandungen verlaufen parallel zueinander.

In dieses Gehäuse 1 sind Wände 2 eingesetzt, deren Grundriß dem lichten Durchtritt des Gehäuses 1 entspricht. Diese Wände 2 sind als Kunststofformkörper, also als einstückig hergestellte Elemente gefertigt. Sie haben einen umlaufenden, wulstartig verdickten Rand 3, der ein in der Wandstärke geringer gehaltenes Mittelteil 4 umschließt. In dieses Mittelteil 4 sind an einer Kante der Wand 2 Löcher 5 eingeformt, die in mehreren Reihen zusammengefaßt sind.

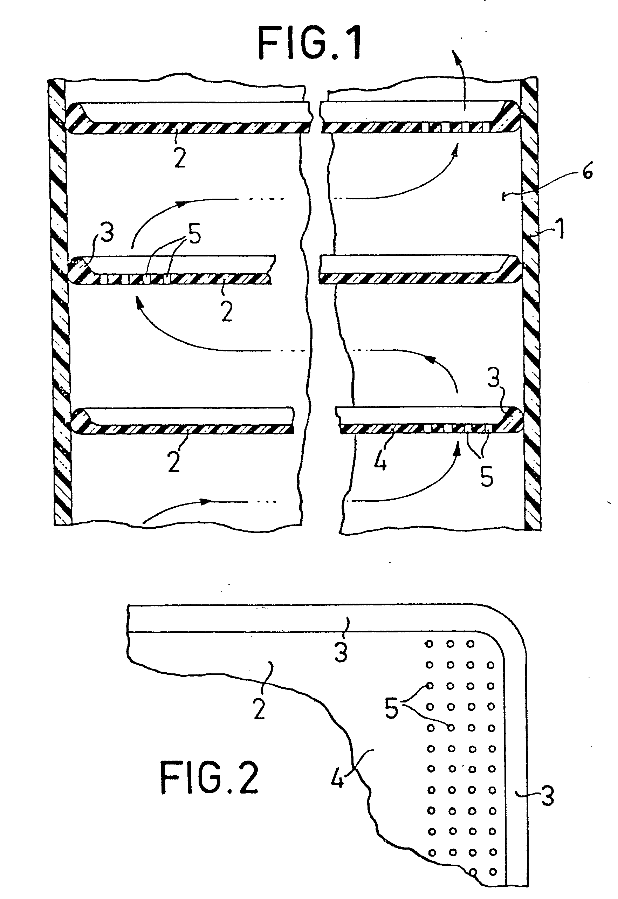

Durch die Symmetrie des Gehäuses 1 und der zugehörigen Wände 2 können diese im Sinne der Fig. 1 in das Gehäuse 1 eingesetzt werden. Bei einer Wand 2 befinden sich also die Löcher 5 auf der einen Gehäuseseite, während bei der folgenden Wand 2 die Löcher 5 sich auf der gegenüberliegenden Gehäuseseite angeordnet sind.

Die mit gleichem Höhenabstand angeordneten Wände 2 bilden somit Filterkammern 6, die mit einem nicht näher dargestellten Filtermaterial ggfs. auch mit unterschiedlichen Filtermaterialen ausgefüllt sind.

Das zu filternde Wasser wird von unten in das Gehäuse 1 eingeleitet, wobei es dann seinen Weg im Sinne der Pfeile nimmt. Die einzelnen Kammern werden also quer, und zwar gegenläufig durchströmt.

Dadurch wird eine optimale Filterwirkung erreicht.

Der verdickte Rand 3 ist bei der Wahl eines geeigneten, elastisch verformbaren Kunststoffes in ausreichendem Masse elastisch verformbar, wenn die Wände 2 in das Gehäuse 1 eingedrückt werden. Dabei werden nicht nur Fertigungstoleranzen ausgeglichen, vielmehr werden durch die elastische Verformung gleichzeitig noch so große Haltekräfte erzeugt, daß eine Selbstfixierung, also eine Halterung ohne zusätzliche Haltemittel erreichbar ist.

**Ansprüche**

1. Filter für Aquarien od. dgl. mit in einem Gehäuse (1) angeordneten, einander parallelen Wänden (2) zur Kammerbildung, die an einem Rand gelocht und so innerhalb des Gehäuses angeordnet sind, daß die Löcher (5) einer Wand einer Gehäusewandung und die Löcher der benachbarten Wand der gegenüberliegenden Gehäusewandung zugekehrt sind, dadurch gekennzeichnet, daß die Wände (2) diejenigen Kammern (6) begrenzen, die das Filtermaterial beinhalten, und daß sich die Löcher (5) entlang

2

einer Kante der Wände (2) erstrecken und das Filtermaterial in einer parallel zu den Wänden (2) verlaufenden Richtung durchströmt wird.

2. Filter nach Anspruch 1, dadurch gekennzeichnet, daß die Wände (2) mit einem umlaufenden wulstartig geformten Rand (3) versehen sind.

3. Filter nach Anspruch 2, dadurch gekennzeichnet, daß der Rand (3) durch Einschieben der Wände (2) in das Gehäuse (1) derart verformbar ist, daß sich die Wände selbst innerhalb des Gehäuses halten.

4. Filter nach Anspruch 1, dadurch gekennzeichnet, daß das Gehäuse (1) einen rechteckigen oder quadratischen (lichten) Querschnitt hat, die Wände (2) einen entsprechenden Grundriss aufweisen und sich die Löcher (5) in mehreren Reihen entlang eines Randes der Wände erstrecken, wobei die Wände derart symmetrisch ausgeführt sind, daß sie wahlweise mit auf der linken oder mit auf der rechten Seite angeordneten Löchern in das Gehäuse einsetzbar sind.

## Claims

1. Filter for aquaria or the like having walls (2) arranged in a housing (1), such walls extending parallel to one another to form a chamber, being provided with openings at one edge, and being arranged within the housing so that the openings (5) of one wall are next to one wall of the housing and the openings of the adjacent wall are next to the opposite wall of the housing, characterised in that the walls (2) define those chambers (6) which contain the filter material, and in that the openings (5) extend along one edge of the walls (2) and the filter material is traversed in a direction extending parallel to the walls (2).

2. Filter according to claim 1, characterised in that the walls (2) are provided with an encircling edge (3) moulded in bead-like fashion.

3. Filter according to claim 2, characterised in that, by pushing the walls (2) inwardly into the housing (1), the edge (3) is deformable in such a manner that the walls themselves are held within the housing.

4. Filter according to claim 1, characterised in that the housing (1) has a rectangular or square (internal) cross-section, the walls (2) have a corresponding configuration and the openings (5) extend in a plurality of rows along one edge of the walls, whereby the walls are of such symmetrical form that they are selectively insertable into the housing either with openings disposed on the left-hand side or with openings disposed on the right-hand side.

## Revendications

1. Filtre pour des aquariums ou des réservoirs semblables, comprenant, pour former des chambres, des cloisons (2), parallèles entre elles et disposées dans une enveloppe (1), qui sont perforées sur un bord et qui sont disposées à l'intérieur de l'enveloppe de manière à ce que les perforations (5) d'une cloison soient tournées vers une paroi de l'enveloppe et les perforations de la cloison voisine vers la paroi opposée de l'enveloppe, caractérisé en ce que les cloisons (2) délimitent les chambres (6) qui contiennent le matériau filtrant et en ce que les perforations (5) s'étendent le long d'une arête des cloisons (2) et le matériau filtrant est traversé suivant une direction s'étendant parallèlement aux cloisons (2).

2. Filtre suivant la revendication 1, caractérisé en ce que les cloisons (2) sont munies d'un bord (3) qui en fait le tour et qui est de type en bourrelet.

3. Filtre suivant la revendication 2, caractérisé en ce que le bord (3) peut être déformé en introduisant les cloisons (2) dans l'enveloppe (1) de façon à ce que les cloisons tiennent d'elles-mêmes à l'intérieur de l'enveloppe.

4. Filtre suivant la revendication 1, caractérisé en ce que l'enveloppe (1) a une section transversale (d'ouverture) rectangulaire ou carrée, les cloisons (2) présentent un contour correspondant en projection horizontale et les perforations (5) s'étendent en plusieurs rangées le long d'un bord des cloisons, les cloisons étant agencées symétriquement de façon à pouvoir être introduites dans l'enveloppe au choix en ayant les perforations disposées du côté gauche ou du côté droit.

# FIG.1

# FIG.2